# EUROPEAN PATENT SPECIFICATION

(11) **EP 3 699 032 B1**
(45) Date of publication and mention of the grant of the patent: **03.04.2024**
(21) Application number: 19212548.2
(22) Date of filing: 29.11.2019
(51) Int. Cl.: B60Q 3/44, B64D 11/00, B60Q 3/82, B60Q 3/47

(54) **SERVICE LIGHT INTEGRATED WITH READING LIGHT SWITCH**
SERVICELAMPE MIT INTEGRIERTEM LESELICHTSCHALTER
ÉCLAIRAGE DE SERVICE INTÉGRÉ AVEC COMMUTATEUR DE LISEUSE

(30) Priority: 20.02.2019 IN 201911006717
(43) Date of publication of application: 26.08.2020
(73) Proprietor: Goodrich Corporation, Charlotte, NC 28217-4578 (US)
(72) Inventor: SARALAYA, Gururaj, Bangalore (IN)
(74) Representative: Dehns

(56) References cited:
- EP-A1- 3 168 152
- EP-A1- 3 566 948
- WO-A1-2018/183820
- US-A1- 2009 229 955
- US-A1- 2017 015 420

## Description

### BACKGROUND

The present invention relates to accessory equipment, and more specifically to a method and system for operating a service light integrated with a reading light.

Airlines are often equipped with accessory equipment to increase the comfort and convenience to its passengers. For example, the aircraft include accessory equipment such as reading lights, personal displays, USB and power outlets to name a few. Airlines also offer Wi-Fi and a range of on-demand movies for the passengers' entertainment. These amenities are provided to the passengers to use at their choosing. EP 3 566 948 relates to a passenger service unit.

WO 2018/183820 A1 relates to a service light controlled by a master switch mounted on a passenger seat.

### BRIEF DESCRIPTION

According to the invention, a system for operating a service light integrated with a reading light is provided in claim 1.

In addition to one or more of the features described herein, further embodiments include operating the service light in the second mode when service is not requested.

In addition to one or more of the features described herein, further embodiments include a switch that controls an ON/OFF state of the reading light and the service light.

In addition to one or more of the features described herein, further embodiments include a service light that uses a color to indicate a requested state.

In addition to one or more of the features described herein, further embodiments include an assembly that includes the reading light, the service indicator light, the switch, and the switch cover.

According to the invention, a method for operating a service light integrated with a reading light is provided in claim 6.

In addition to one or more of the features described herein, further embodiments include a switch that controls an ON/OFF state of the reading light and the service light.

In addition to one or more of the features described herein, further embodiments include a switch cover that is a transparent switch cover that is illuminated by the service light.

These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike:
FIG. 1 depicts an aircraft in accordance with an embodiment;
FIG. 2 depicts a diagram of a system in accordance with one or more embodiments;
FIG. 3 depicts another diagram of a system in accordance with one or more embodiments; and
FIG. 4 depicts a flow diagram of a method for operating the service light integrated with the reading light in accordance with one or more embodiments.

### DETAILED DESCRIPTION

As airlines compete to obtain customers various airlines provide a range of inflight services for the passengers to enhance their comfort and flight experience. When providing inflight service, flight attendants and the crew may be faced with deciding whether to disturb a sleeping passenger to ask if an inflight service such as refreshments should be provided. Also, from the passenger's perspective, the passenger may not want their sleep disturbed as some passengers may desire to get rest on their long flights. Uninterrupted sleep and the appropriate level of inflight service can enhance the overall flight experience of passengers especially those that are experiencing jet lag from long distance flights.

Some airlines provide "Do Not Disturb" signs/stickers which can be affixed to the seatbacks to provide an indication to the flight attendants if service should or should not be provided. However, if the passenger in the seat to which the sign is affixed is reclined, the flight attendants may not be able to readily see the sign which fails to provide the proper notification to the flight attendant which can lead to a sleeping passenger being disturbed.

In the event the signs/stickers are unavailable, the passengers must inform the flight attendants to request that they not be disturbed during the flight. This is not only inconvenient for the passengers but also requires the flight attendants to remember which passengers that do not wish to be disturbed. This can become problematic as more and more passengers request to not be disturbed. Also, if multiple flight attendants service the same passengers of the aircraft, the flight attendants must share the information with the other flight attendants so that everyone has the correct information for each of the passengers. Furthermore, passengers may want service later on during the flight and they would have to once again request service from the flight attendants.

The techniques described herein provide an integrated service light and reading light operated by a switch and a method for operating the integrated device. The integrated device provides a single switch to operate both the reading light and the service light. In addition, the switch cover that covers the service light is coupled to the switch of the integrated device and it also functions as the service indicator when illuminated by the service light. The switch cover functions as a push button to operate the switch to control both the reading light and the service light.

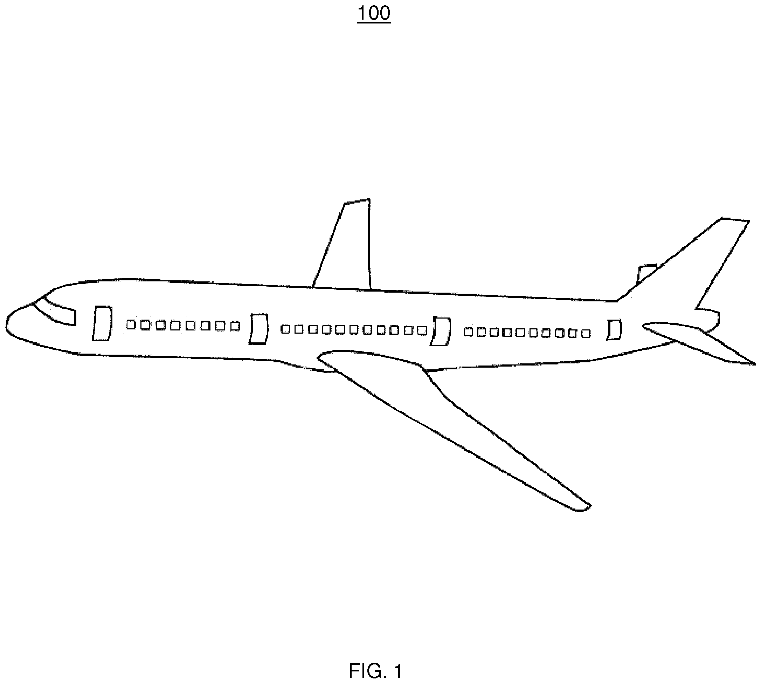

Now referring to FIG. 1, an aircraft 100 is shown that can be equipped with the integrated device described below. It should be understood the integrated device can also be used in other systems or locations and is not limited to the aircraft 100 provided in FIG. 1. For example, the integrated mechanism can be incorporated on a train or bus where reading lights are installed, and service can be provided to its passengers. In addition, the service light and switch cover can also be used to signal different indications to others.

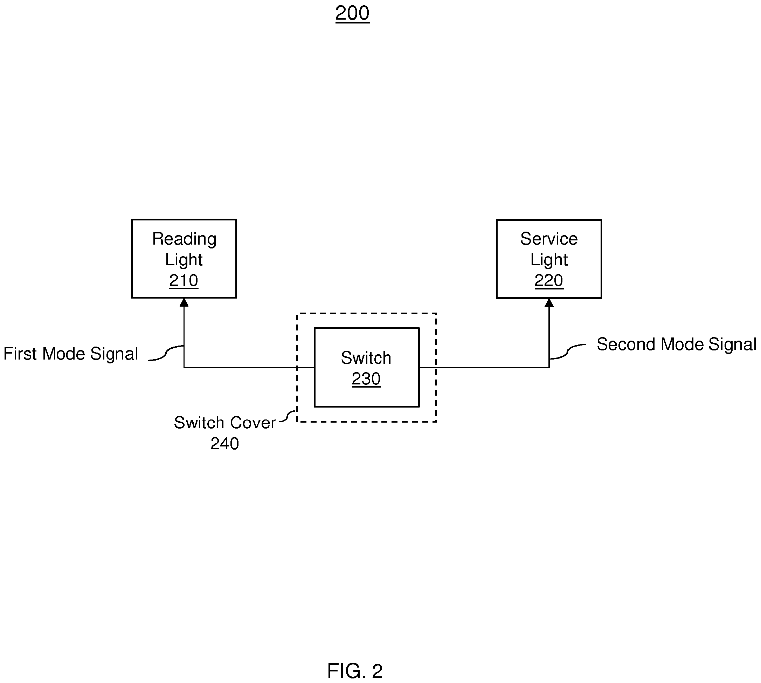

FIG. 2 depicts an image and block diagram for a system in accordance with one or more embodiments. As shown, the system 200 includes a reading light 210 and a service light 220. In one or more embodiments, the service indicator 220 can be used to signal that "No Service" is needed such as a "Do Not Disturb" sign. The reading light 210 and the service light 220 are operably coupled to the switch 230. For example, a green light can be used to indicate service is desired and a red light can be used to indicate that service is not desired. In another example, the red light alone may be used to indicate that no service is desired without the need of having a green light to indicate service is desired. This can reduce power consumption from the power source (not shown). The switch 230 can be used to operate the reading light 210 in a first mode and the service light 220 in a second mode. The switch 230 is enclosed by a housing or assembly 310 that includes a switch cover 240. The switch cover 240 can include a transparent or opaque type cover that allows light to pass to provide an indication to others such as those of the airline staff and crew.

In some embodiments, instead of having a particular color light source for the service light 220 to provide the indication, the switch cover 240 can have a particular color to provide the indication when illuminated. The color can be selected to cause the least amount of disruption to a sleeping passenger.

The switch 230 can be activated by pressing the switch cover 240 or button to operate the reading light 210 and the service light 220. That is, a single switch 230 can be used to turn the connected equipment ON/OFF.

The switch cover 240 can be pressed for a first duration of time to send a signal to the reading light 210 to control the operation of the reading light 210. The first mode of operation of the switch 230 controls the reading light 210. In addition, the switch cover 240 can be pressed for a second duration of time to send a signal to the service light 220 to control the operation of the service light 220. The second mode of operation of the switch 230 controls the service light 220. In one or more embodiments, the first duration and the second duration of time are different. In some instances, the first duration can be configured to be longer than the second duration or vice-versa. The switching mechanism to control the reading light 210 and service light 220 can be implemented in hardware, software, or a combination thereof. It should be understood that more than two devices (reading light 210 and service light 220) can be controlled by the single switch 230 and is not limited by the example provided above.

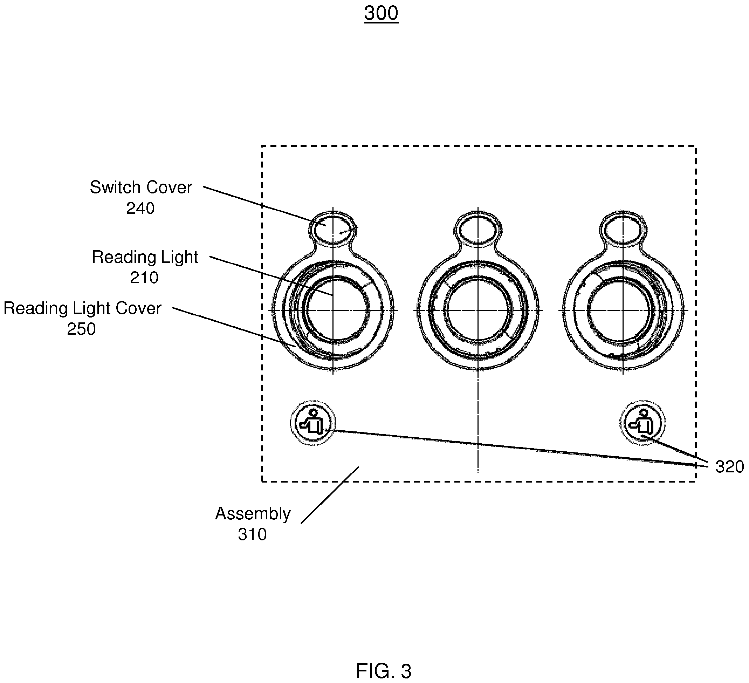

FIG. 3 depicts another illustration of a system 300 showing a top-down perspective view. The top-down perspective view shows the reading light 210, the switch cover 240, and reading light cover 250. The assembly 310 houses the reading light 210, service light 220, switch 230, switch cover 240, reading light cover 250 and the flight attendant indicator 320.

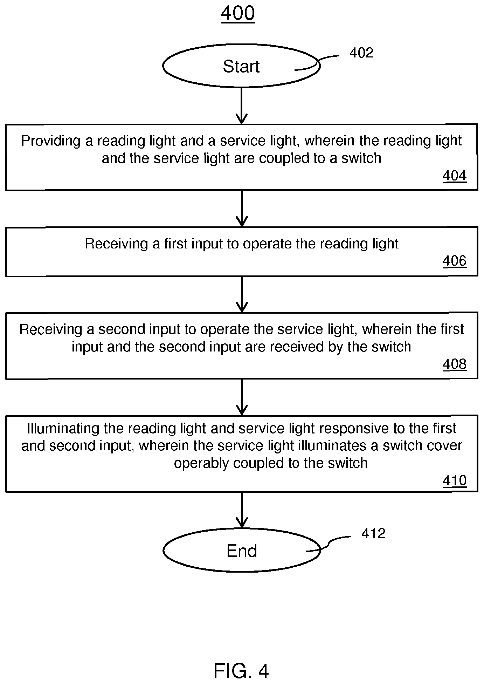

Now referring to FIG. 4, a flowchart of a method 400 for operating the mechanism is shown. The method 400 begins at block 402 and continues to block 404 which includes providing a reading light 210 and a service light 220, wherein the reading light 210 and the service light 220 are coupled to a switch 230. At block 404, the method 400 provides receiving a first input to operate the reading light 210. The first input is received by the switch 230.

The method 400 at block 408 provides receiving a second input to operate the service light 220, wherein the first input and the second input are received by the switch 230. Block 410 provides illuminating the reading light 210 and service indicator light 220 responsive to the first input and the second input, wherein the service light 220 illuminates a switch cover 240 covering the switch 230.

According to the invention, a short press or short duration of time can be used to operate the reading light 210 in a first mode, and a long press or duration of time can be used to operate service light 220 the second mode. In a non-limiting example, the short press can be a 1-second press and a long press can be longer than 3 seconds. That is, the short press and long press can use the same switch /button to operate the reading light 210 and the service light 220. It should be understood that different durations can be configured to operate the reading light 210 and the service light 220 and is not limited by the example provided above.

The service light 220 can be a red light that indicates to the flight attendant that no service is desired. In addition, a green light can be used to indicate that inflight service is desired. The service light 220 is used to illuminate the transparent switch cover 240 which is readily observable to the flight staff and crew. The method 400 ends at block 412. It should be understood that other steps or different steps can be used in the method 400.

The technical effects and benefits include enhancing the passenger's overall flight experience by providing a mechanism to indicate a desired level of inflight service. The technical effects and benefits also provide additional convenience to passengers at a minimal cost. The system and integrated device can be provided as a new offering or premium economy feature left for passengers to select while booking their flights. In addition, the mechanism can be retrofit on existing aircraft, unlike costlier options that may implement this feature.

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made for elements thereof without departing from the scope of the present invention. Therefore, it is intended that the present invention not be limited to the particular embodiment disclosed as the best mode contemplated for carrying out this present invention, but that the present invention will include all embodiments falling within the scope of the claims.

## Claims

1. A system for operating a service light integrated with a reading light, the system comprising:
a reading light (210);
a service light (220) configured to indicate whether service is desired or not; and
a switch (230) operably coupled to a switch cover (240), the switch (230) configured to operate the reading light (210) and the service light (220), wherein the switch (230) is configured to control the reading light (210) in a first mode and the service light (220) in a second mode, wherein the switch (230) receives an input for a first duration of time and an input for a second duration of time to trigger the first mode and second mode, respectively, wherein the first duration of time is shorter than the second duration of time, wherein the service light (220) is configured to illuminate the switch cover (240), and wherein the switch cover (240) operates as a push button to cause the switch (230) to provide a signal to the reading light (210) and the service light (220).

2. The system of claim 1, wherein the second mode operates the service light (220) indicating service is not requested.

3. The system of any preceding claim, wherein the switch (230) controls an ON/OFF state of the reading light (210) and the service light (220).

4. The system of any preceding claim, wherein the service light (220) uses a color to indicate a requested state.

5. The system of any preceding claim, the system further comprises an assembly that includes the reading light (201), the indicator service light (220), the switch (230), and the switch cover (240).

6. A method for operating a service light integrated with a reading light, the method comprising:
providing a reading light (210) and a service light (220), wherein the reading light and the service light are coupled to a switch (230);
receiving a first input to operate the reading light (210) in a first mode;
receiving a second input to operate the service light (220) in a second mode, wherein the first input and second input are received by the switch (230); and
illuminating the reading light (210) and the service light (220) responsive to the first input and the second input, wherein the service light (220) illuminates a switch cover (240) operably coupled to the switch (230), wherein the first input is operated based at least in part on triggering the switch (230) for a first duration of time, wherein the second input is operated based at least in part on triggering the switch (230) for a second duration of time, wherein the first duration of time is shorter than the second duration of time, and wherein the switch cover (240) functions as a push button to operate the switch (230) to control the reading light (210) and the service light (220).

7. The method of any of claim 6, wherein the switch (230) controls an ON/OFF state of the reading light (210) and the service light (220).

8. The method of any of claims 6-8, wherein the switch cover (240) is a transparent switch cover that is illuminated by the service light (220).

## Patentansprüche

1. System zum Betreiben eines Servicelichts, das in ein Leselicht integriert ist, wobei das System Folgendes umfasst:
ein Leselicht (210);
ein Servicelicht (220), das dazu konfiguriert ist, anzugeben, ob Service gewünscht ist oder nicht; und
einen Schalter (230), der mit einer Schalterabdeckung (240) betriebsfähig gekoppelt ist, wobei der Schalter (230) dazu konfiguriert ist, das Leselicht (210) und das Servicelicht (220) zu betreiben, wobei der Schalter (230) dazu konfiguriert ist, das Leselicht (210) in einem ersten Modus und das Servicelicht (220) in einem zweiten Modus zu steuern, wobei der Schalter (230) eine Eingabe für eine erste Zeitdauer und eine Eingabe für eine zweite Zeitdauer empfängt, um den ersten Modus beziehungsweise den zweiten Modus auszulösen, wobei die erste Zeitdauer kürzer als die zweite Zeitdauer ist, wobei das Servicelicht (220) dazu konfiguriert ist, die Schalterabdeckung (240) zu erleuchten, und wobei die Schalterabdeckung (240) als eine Drucktaste betrieben wird, um zu bewirken, dass der Schalter (230) ein Signal an das Leselicht (210) und das Servicelicht (220) bereitstellt.

2. System nach Anspruch 1, wobei der zweite Modus das Servicelicht (220) so betreibt, dass es angibt, dass kein Service angefordert wird.

3. System nach einem der vorhergehenden Ansprüche, wobei der Schalter (230) einen EIN/AUS-Zustand des Leselichts (210) und des Servicelichts (220) steuert.

4. System nach einem der vorhergehenden Ansprüche, wobei das Servicelicht (220) eine Farbe verwendet, um einen angeforderten Zustand anzugeben.

5. System nach einem der vorhergehenden Ansprüche, wobei das System ferner eine Baugruppe umfasst, die das Leselicht (201), das Anzeigeservicelicht (220), den Schalter (230) und die Schalterabdeckung (240) beinhaltet.

6. Verfahren zum Betreiben eines Servicelichts, das in ein Leselicht integriert ist, wobei das Verfahren Folgendes umfasst:
Bereitstellen eines Leselichts (210) und eines Servicelichts (220), wobei das Leselicht und das Servicelicht mit einem Schalter (230) gekoppelt sind;
Empfangen einer ersten Eingabe zum Betreiben des Leselichts (210) in einem ersten Modus;
Empfangen einer zweiten Eingabe zum Betreiben des Servicelichts (220) in einem zweiten Modus, wobei die erste Eingabe und die zweite Eingabe durch den Schalter (230) empfangen werden; und
Erleuchten des Leselichts (210) und des Servicelichts (220) als Reaktion auf die erste Eingabe und die zweite Eingabe, wobei das Servicelicht (220) eine Schalterabdeckung (240) erleuchtet, die betriebsfähig mit dem Schalter (230) gekoppelt ist, wobei die erste Eingabe mindestens teilweise basierend auf einem Auslösen des Schalters (230) für eine erste Zeitdauer betrieben wird, wobei die zweite Eingabe mindestens teilweise basierend auf einem Auslösen des Schalters (230) für eine zweite Zeitdauer betrieben wird, wobei die erste Zeitdauer kürzer als die zweite Zeitdauer ist und wobei die Schalterabdeckung (240) als eine Drucktaste fungiert, um den Schalter (230) zu betreiben, um das Leselicht (210) und das Servicelicht (220) zu steuern.

7. Verfahren nach einem von Anspruch 6, wobei der Schalter (230) einen EIN/AUS-Zustand des Leselichts (210) und des Servicelichts (220) steuert.

8. Verfahren nach einem der Ansprüche 6-8, wobei die Schalterabdeckung (240) eine transparente Schalterabdeckung ist, die durch das Servicelicht (220) erleuchtet wird.

## Revendications

1. Système de fonctionnement d'un éclairage de service intégré à une liseuse, le système comprenant :
une liseuse (210) ;
un éclairage de service (220) configuré pour indiquer si un service est souhaité ou non ; et
un commutateur (230) couplé de manière fonctionnelle à un couvercle de commutateur (240), le commutateur (230) étant configuré pour actionner la liseuse (210) et l'éclairage de service (220), dans lequel le commutateur (230) est configuré pour commander la liseuse (210) dans un premier mode et l'éclairage de service (220) dans un second mode, dans lequel le commutateur (230) reçoit une entrée pour une première durée de temps et une entrée pour une seconde durée de temps pour déclencher le premier mode et le second mode, respectivement, dans lequel la première durée de temps est plus courte que la seconde durée de temps, dans lequel l'éclairage de service (220) est configuré pour éclairer le couvercle de commutateur (240), et dans lequel le couvercle de commutateur (240) fonctionne comme un bouton poussoir pour amener le commutateur (230) à fournir un signal à la liseuse (210) et à l'éclairage de service (220) .

2. Système selon la revendication 1, dans lequel le second mode actionne l'éclairage de service (220) indiquant un service non demandé.

3. Système selon une quelconque revendication précédente, dans lequel le commutateur (230) commande un état marche/arrêt de la liseuse (210) et de l'éclairage de service (220).

4. Système selon une quelconque revendication précédente, dans lequel l'éclairage de service (220) utilise une couleur pour indiquer un état demandé.

5. Système selon une quelconque revendication précédente, le système comprend en outre un ensemble qui comporte la liseuse (201), le voyant d'éclairage de service (220), le commutateur (230) et le couvercle de commutateur (240).

6. Procédé de fonctionnement d'un éclairage de service intégré à une liseuse, le procédé comprenant :
la fourniture d'une liseuse (210) et d'un éclairage de service (220), dans lequel la liseuse et l'éclairage de service sont couplés à un commutateur (230) ;
la réception d'une première entrée pour faire fonctionner la liseuse (210) dans un premier mode ;
la réception d'une seconde entrée pour faire fonctionner l'éclairage de service (220) dans un second mode, dans lequel la première entrée et la seconde entrée sont reçues par le commutateur (230) ; et
l'éclairage de la liseuse (210) et de l'éclairage de service (220) en réponse à la première entrée et à la seconde entrée, dans lequel l'éclairage de service (220) éclaire un couvercle de commutateur (240) couplé de manière fonctionnelle au commutateur (230), dans lequel la première entrée est actionnée au moins en partie sur la base du déclenchement du commutateur (230) pendant une première durée de temps, dans lequel la seconde entrée est actionnée au moins en partie en déclenchant le commutateur (230) pendant une seconde durée de temps, dans lequel la première durée de temps est inférieure à la seconde durée de temps, et dans lequel le couvercle de commutateur (240) fonctionne comme un bouton poussoir pour actionner le commutateur (230) pour commander la liseuse (210) et l'éclairage de service (220).

7. Procédé selon une quelconque revendication 6, dans lequel le commutateur (230) commande un état marche/arrêt de la liseuse (210) et de l'éclairage de service (220).

8. Procédé selon l'une quelconque des revendications 6 à 8, dans lequel le couvercle de commutateur (240) est un couvercle de commutateur transparent éclairé par l'éclairage de service (220) .
